# EUROPEAN PATENT SPECIFICATION

(11) **EP 3 862 268 B1**
(45) Date of publication and mention of the grant of the patent: **07.06.2023**
(21) Application number: 21155297.1
(22) Date of filing: 04.02.2021
(51) Int. Cl.: B64D 11/00, A62B 25/00

(54) **AIRCRAFT OXYGEN SUPPLY UNIT WITH BLISTER PACK TRAY**
SAUERSTOFFVERSORGUNGSEINHEIT FÜR FLUGZEUGE MIT BLISTERPACKUNGSSCHALE
UNITÉ D'ALIMENTATION EN OXYGÈNE D'AÉRONEF AVEC PLATEAU D'EMBALLAGE-COQUE

(30) Priority: 04.02.2020 DE 102020201322; 03.02.2021 US 202117166530
(43) Date of publication of application: 11.08.2021
(73) Proprietor: B/E Aerospace, Inc., Winston Salem, NC 27105 (US)
(72) Inventor: BAKER, Bryce C., Raymore, MO 64083 (US); TOEWS, Scott A., Winston-Salem, NC 27105 (US); DEGENHARDT, Detlev, 23617 Stockelsdorf (DE)
(74) Representative: Dehns

(56) References cited:
- EP-A2- 1 602 577
- WO-A1-2009/087488
- US-A- 4 481 945
- US-A1- 2013 147 239
- US-A1- 2015 101 952

## Description

### TECHNICAL FIELD

Embodiments of the inventive concepts disclosed herein are directed to a device for keeping ready passenger oxygen masks aboard an aircraft.

### BACKGROUND

Usually, passenger aircrafts comprise so-called passenger service units (PSU) which are arranged above the passenger seats and in which passenger oxygen masks are accommodated (along with, e.g., reading lights, air nozzles/gaspers, and displays), said passenger oxygen masks (e.g., in the event of a pressure drop within the cabin) falling out downwards and being able to be gripped and put on by the passengers. However, given the conditions under which said passenger oxygen masks are likely to deploy, passengers may have difficulty putting on the masks with optimal speed. Further, the said passenger oxygen masks are connected to an oxygen supply by flexible tubes which hang from the PSU when the masks are deployed. Said flexible tubes, along with pull elements for manual deployment of the said passenger oxygen masks, may be prone to tangling, further complicating passenger efforts to put on the masks as quickly and easily as possible. Oxygen supply units are described in US 2015/101952, EP 1602577 and US 4481945.

### SUMMARY

Embodiments of the inventive concepts disclosed herein are directed to a device for providing passenger oxygen masks for an overhead passenger service unit (PSU) such that the masks may be operated by and donned by passengers with optimal ease, efficiency, and speed. Further, the device may prevent the tangling of oxygen tubes and pull elements with one another.

The invention provides a device as defined by claim 1.

In embodiments, the oxygen connection may be arranged in or on the PSU and is connectable to an oxygen source. The oxygen source may herein comprise an oxygen container which is arranged directly in the PSU. In some embodiments, the respective aircraft in which the PSU is arranged may also comprise one or more central oxygen sources which are connected to the oxygen connection via suitable conduits. In some embodiments, the oxygen source may comprise an oxygen generator, in which a chemical reaction can be effected for providing oxygen. The oxygen connection may be connected to an oxygen coupling of the module container; for example, this connection may be achieved via a corresponding coupling device which can be locked on the oxygen connection, e.g., via latching or positive-fit connection, as has been known for some time now in the case of tube couplings.

In embodiments, the module container may comprise one or more compartments in which the passenger oxygen masks are accommodated, ready for passenger use. For example, each module container may comprise a tube and an oxygen mask which are put together, or wound up according to a defined scheme, so that the tube and mask can fall out of the compartments on release. In some embodiments the module container may be equipped with passenger oxygen masks separately and independently of the PSU and be inserted in its entirety into the PSU, in particular for maintenance purposes (e.g., due to the separation of the module container from the PSU). The arrangement of passenger oxygen masks with associated components such as tubes, re-breather bags, and the like in the module container can be effected under controlled conditions and in a prescribed manner in an ergonomically favorable position.

In embodiments, the incorporation of the passenger oxygen masks into the PSU can be easily achieved by simply inserting the module container into the PSU. The connection to the oxygen source can be ensured by the insertion of the module container by way of an oxygen coupling and the oxygen connection. The connection of the tubes which belong to the passenger oxygen masks can be achieved by way of a manifold (distributor) which is arranged in the module container. For example, a receiving frame which sets the spatial arrangement of an oxygen coupling of the module container to the oxygen connection of the PSU can be provided in the PSU for receiving the module container. Herein, the module container can be fastened by further positive connections, for example by way of one or more hook-and-loop fastenings as is explained hereinafter.

In embodiments, the module container comprises a release opening which is closed by the cover. The release opening can extend over a complete side of the module container to which the at least one compartment is opened. For example, the release opening may be designed to be directed downwards, e.g., toward the passenger seats, given a module container inserted into the PSU. The covering of the module container can ensure that the passenger oxygen masks are present in the module container in a manner in which they are practically completely closed off during the transport and storage and are present in the container in the designated state ready for use. In embodiments, only a release of the cover may expose the passenger oxygen masks, which then deploy downward toward the passenger seats and can be put on by passengers. The module container remains closed after insertion into the PSU.

In embodiments, the cover comprises at least one pull flag for removing the cover from the opening edge, thus opening the release opening and deploying the passenger oxygen masks. For example, on initiating an oxygen emergency supply to the passengers, firstly a usual opening of flaps on the PSUs is effected. By way of this opening of flaps, the cover which remains on the module container is freely accessible. In some embodiments, a free end of the at least one pull flag may advantageously drop out of the PSU in the direction of the passenger seats directly after the pivoting open of the flaps, such that the free end can be gripped and pulled by a passenger occupying the passenger seat.

In embodiments, the cover (and/or the pull flag connected to the cover) may be connected to an activation unit. For example, the activation unit may be activated by a pulling of the pull flag removing the cover (and oxygen being directed to the passenger oxygen masks). As only a single pull flag may be required to remove the cover and deploy the passenger oxygen masks from their compartments, individual pull flags for each oxygen mask are no longer necessary, simplifying the deployment of the oxygen masks and preventing the tangling of excess pull flags with oxygen tubes.

In embodiments, the precise type of release/activation unit may depend on the design of the oxygen source. For example, if an oxygen generator is incorporated the activation unit may initiate the start of a chemical reaction generating oxygen gas. If, however, the oxygen source is an oxygen container, the activation unit may comprise a valve opened by the pull flag or by the cover. In accordance with the present invention, the cover is connected to the opening edge via a positive-fit connection device (e.g., or material-fit connection device). For example, the positive-fit connection device may be articulable as simply as possible, e.g., without excess or additional bars, levers, toggles, button, or other elements to operate. The positive-fit connection device may be operable via a particular pull force without additional or further action. For example, positive-fit connection device may incorporate elements fastened such that when acted upon by a predefined pull force the components may deform to such an extent that the positive fit releases and the components detach from each other. The positive-fit connection element comprises a hook-and-loop fastener (e.g., VELCRO^{®} brand) having a light weight and attachable to the opening edge and cover, e.g., via adhesive backings in complementary shapes (e.g., flexible pairs of tapes incorporating flexible mushroom-head elements).

In embodiments, the pull flag may be disposed on a side of the cover away from the opening. For example, upon opening a flap of the PSU, a free end of the pull flag may then deploy in the direction of the passenger seats, such that an occupant of the passenger seats may directly pull away the cover via the deployed pull flag. In some embodiments, the cover and/or pull flag may be conspicuously colored and/or labeled for easy identification by passengers.

In some embodiments, the pull flag may be disposed on an edge of the cover, e.g., an end edge or delimitation edge. For example, pulling the pull flag may first release the respective edge of the cover and facilitate the continuous, advancing release of the cover via continued pulling force. The pull flag may be disposed on a side of the cover opposite or away from the release opening. If the cover has a substantially polygonal shape (e.g., a quadrilateral having two opposing longer edges and two opposing shorter edges), the pull flag may be disposed on a shorter delimitation edge to facilitate the release of the cover thereby.

In some embodiments, the pull flag and cover may be incorporated into a single piece or a single component, reducing the complexity of, and improving the overall reliability of, the connection between the pull flag and cover.

In some embodiments, the pull flag may accommodate increased lengths, thereby simplifying pulling the pull flag by a passenger, by folding the pull flag one or more times in its undeployed state. For example, the folded pull flag may be stowed between the cover and flap of the PSU and configured to unfold on opening of the flap. In embodiments, the pull flag may comprise a sequence of individually folded segments, each segment extending between two adjacent bend locations and not exceeding the overall length of the cover.

In embodiments, multiple pull flags may be incorporated. For example, two pull flags may be provided, designed as one piece or component with the cover and connected to the cover at an edge. The two pull flags may be disposed at as great a distance from each other as possible, e.g., disposed along the edges of the cover at opposing or distant sides thereof and automatically deploying on opening of the flap. In some embodiments, the accessibility of the pull flags may be further improved by leaf springs or other spring means folded within the region of the cover and providing that, on opening of the flap, the pull flag is deployed laterally at a distance to the opening and is laterally accessible to passengers. For example, if both pull flags are incorporated as a single piece or component with the cover, the oxygen connection of the cover may be ensured such that the oxygen feed is activated by the pulling of either pull flag.

In embodiments, the passenger oxygen masks may be arranged freely in their associated compartment or compartments, held therein exclusively by the cover (e.g., apart from any tubes or hoses connecting the masks to an oxygen connection or oxygen supply). Accordingly, upon removal of the cover, the passenger oxygen masks may directly deploy downwards.

In embodiments, the cover may comprise polyethylene fibers (e.g., high-density polyethylene), polypropylene fibers, or some combination thereof. For example, the cover may comprise a non-woven isotropic fiber arrangement (e.g., fibrillated fine filaments) having a high tear resistance. The cover may incorporate a very low material thickness, e.g., comparable to a sheet of paper, and the pull flag may similarly be formed of like materials.

In embodiments, the module container comprises an oxygen coupling which is in fluid connection with the passenger oxygen masks and which is designed to ensure a fluid connection with the oxygen connection. For example, the oxygen coupling in particular may comprise a latching coupling device or a device capable of locking in another manner. In some embodiments, the oxygen coupling may be a self-locking quick-coupling, such that the necessary connection to the oxygen connection is created with the insertion of the module container into the PSU.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a bottom view of a passenger service unit (PSU) according to example embodiments of this disclosure, the PSU having an opened flap;
FIG. 2 is a perspective view of a module container;
FIG. 3 is an isometric view of a PSU cover according to example embodiments of this disclosure, the PSU cover having an integrated pull flag;
FIG. 4 is a bottom view of the PSU of FIG. 1 with an opened flap and a projecting pull flag;
FIG. 5 is a bottom view of the PSU of FIG. 1 with an opened flap, a removed cover, and passenger oxygen masks hanging from the PSU;
FIG. 6 is an isometric view of a PSU cover according to FIG. 3 but having two integrated pull flags in a partially unfolded state;
and FIG. 7 is an isometric view of the PSU cover of FIG. 6 with the two pull flags in a fully unfolded state.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

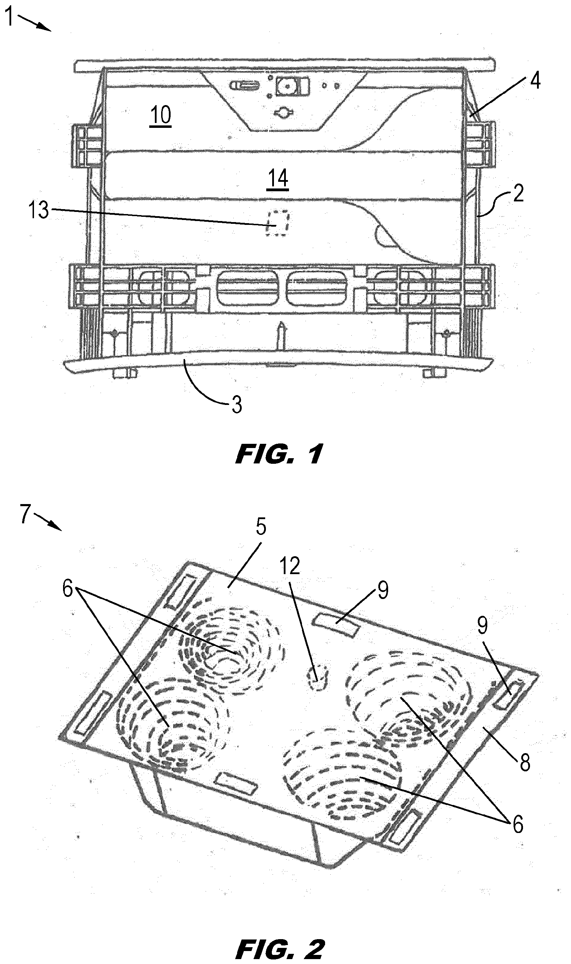

Referring now to FIG. 1, a passenger service unit (PSU) 1 is shown.

In embodiments, the PSU 1 may comprise a housing 2 which can be installed into an installation shaft or a channel above a passenger seat (e.g., or group of seats) in a passenger cabin of a commercial aircraft. A flap 3 may be provided on a lower side of the housing 2 which faces the passenger seats, said flap opening automatically or by way of an opening command which is given from a cockpit (e.g., in the case of a drop in the cabin pressure) in order to release the passenger oxygen masks. In embodiments, a device 4 for keeping ready passenger oxygen masks which are explained in more detail hereinafter is located in the housing 2.

Referring now to FIG. 2, a module container 5 is shown.

In embodiments, the module container 5 may incorporate several compartments 6 which are opened on one side for receiving passenger oxygen masks. For example, the module container 5 may be manufactured via a deep-drawing of a workpiece fashioned of plastic or a like material, wherein the individual compartments 6 are designed as individual deepenings (e.g., cavities, holes). In this representation, four compartments 6 are provided by way of example, the four compartments accordingly being able to receive four passenger oxygen masks (with the associated tubes).

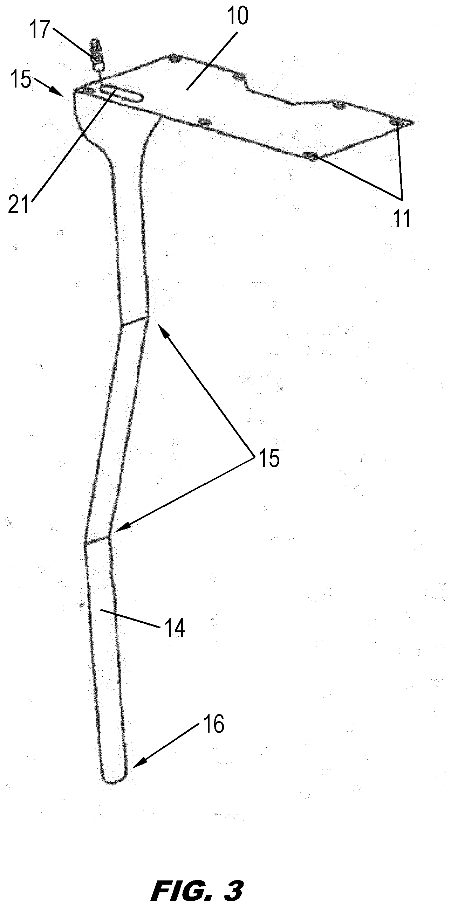

In embodiments, the module container 5 may comprise a release opening 7, in which all compartments 6 terminate (e.g., run out). For example, the compartments 6 may be open to the bottom (in the installed position) and may run out into the release opening 7 of the module container 5. In embodiments, several hook and loop strips 9 (e.g., VELCRO^{®} brand hook or loop fasteners ) are arranged on an opening edge 8 of the release opening 7, in order to receive a cover 10 (e.g., as best shown by FIG. 3) and which comprises several opposing hook and loop points 11 at positions which correspond to the hook/loop strips 9 and which are connectable to the hook/loop strips 9. Thereby a complete hook and loop fastener is formed.

In embodiments, the passenger oxygen masks which are to be arranged in the compartments 6 may each be connected to an oxygen coupling 12 via a tube, said coupling being covered in FIG. 2 and therefore not clearly shown thereby. For example, the oxygen coupling 12 may be connected to an oxygen connection 13 in the inside of the PSU 1, said oxygen connection being indicated in FIG. 1, likewise being covered and in turn being connectable to an oxygen source. In embodiments, the oxygen source may comprise an oxygen container which is located in the PSU 1, an oxygen container which is arranged outside the PSU 1, or an oxygen generator which is located in the PSU 1.

In embodiments, the cover 10 may close the module container 5 and keep the passenger oxygen masks ready for use within the compartments 6. For example, the cover 10 may remain on the module container 5 even after incorporation into the PSU 1. Accordingly, the passenger oxygen masks may also be firmly held by way of the cover 10 after integration into the PSU 1, so that the masks do not automatically fall out given an opened flap 3.

In embodiments, a pull flag 14 (e.g., drawstring) may be provided for releasing the cover 10 and herewith all passenger oxygen masks. For example, the pull flag 14 may be implemented as a single piece with the cover 10. The pull flag 14 may connect onto an end edge or edge of the cover 10. In embodiments, a width of the pull flag 14 may be smaller than the cover 10. For example, the width may be continuously reduced on a section of the pull flag 14 facing the cover 10 in order to achieve a harmonic force process. The cover 10 and the pull flag 14 may be designed from a highly tear-resistant but supple plastic fleece or non-woven material, e.g., based on polyethylene or polypropylene.

Referring now to FIG. 3, several abrupt bend locations 15 (e.g., kinks) which may divide the pull flag 14 into individual segments are represented.

In embodiments, the lengths of each segment between bend locations 15 may correspond roughly to the length of the cover 10 or just short of said length, so that the pull flag 14 may be folded in a manner bearing on the cover 10 in a flat manner and can be held by the flap 3. For example, after opening the flap 3, a free end 16 of the pull flag 14 may fall out, and the pull flag 14 may be gripped by a user. By way of pulling on the pull flag 14, the hook/loop points 11 are detached from the hook/loop strips 9 and the cover 10 can be completely removed.

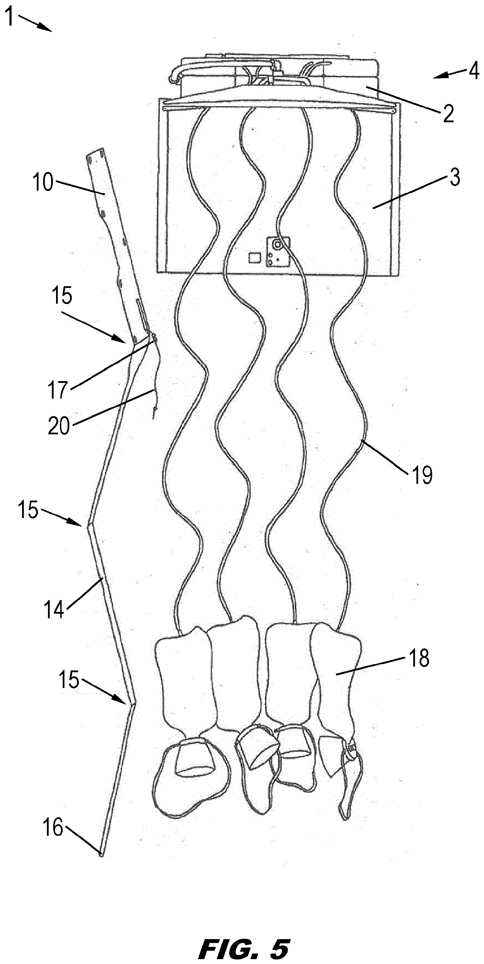

In embodiments, the cover 10 on the side which comprises the hook/loop points 11 may include a connector 17 which connects the cover 10 to an activation unit (not shown here) for activating an oxygen flow from the oxygen connection 13 to the passenger oxygen masks. For example, the connector 17 can comprise a pull wire (20, FIG. 5) or may itself connected to said pull wire. For fastening the connector 17 to the cover 10, a suitable material strip 21 may be positively or materially connected to the connector 17 and may, e.g., be welded to the cover 10. If the cover 10 is detached from the module container 5, the activation unit may be activated according to a common mechanism by way of pulling on the connector 17.

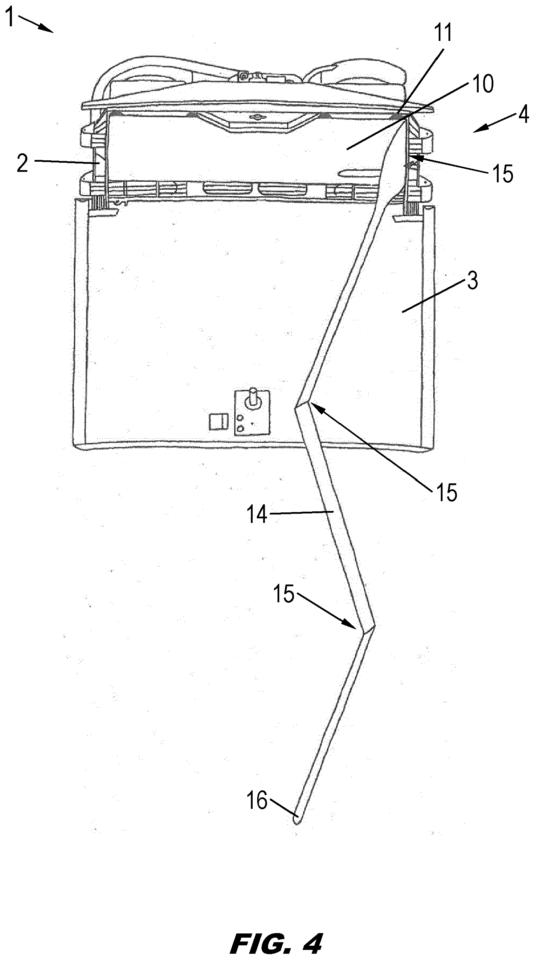

Referring now to FIG. 4, the PSU 1 is disclosed with an opened flap 3 and a deployed (e.g., dropped out) pull flag 14.

In embodiments, the pull flag 14 may unfold at each bend location 15 so that the pull flag projects significantly out of the PSU 1 or the module container 7. For example, the cover 10 may still be located on the module container 7 and the hook/loop points 11 are connected to the respective hook/loop strips 9 (FIG. 3) of the edge 8 of the module container 7.

Referring also to FIG. 5, the PSU 1 is disclosed with the cover 10 detached.

In embodiments, upon detachment of the cover 10, the passenger oxygen masks 18 may no longer be held within the compartments 6 and may deploy from the PSU 1 or from the module container 7. All passenger oxygen masks 18 may be in fluid connection with the oxygen connection 13 via a tube 19. In embodiments, the connector 17 may include a pull-wire 20 configured to be pulled from or out of of the PSU 1, by which means an activation unit (not shown) may be activated. For example, the passenger oxygen masks 18 are supplied with oxygen by way of the said activation unit.

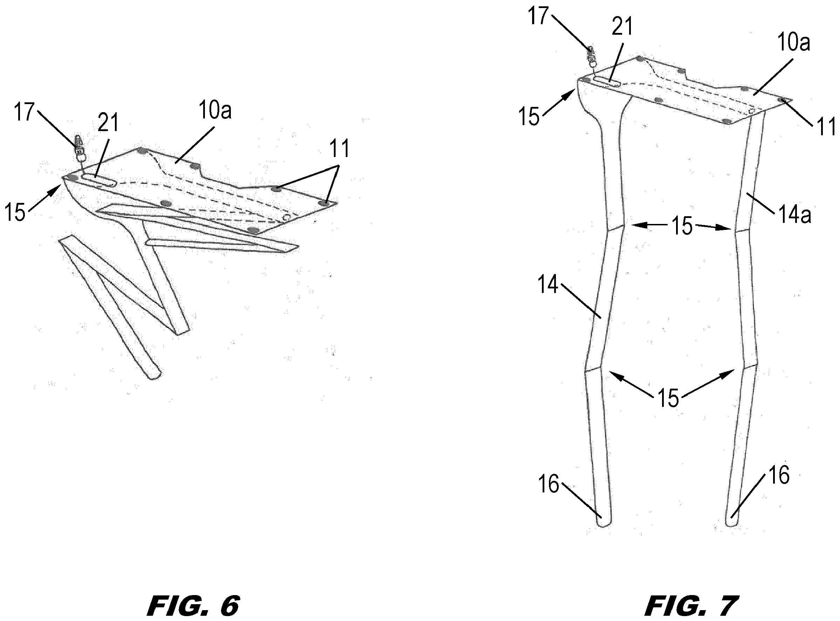

Referring now to FIGS. 6 and 7, an alternative cover 10a for the PSU (1, FIG. 1) is disclosed.

In embodiments, the alternative cover 10a may be implemented and may function similarly to the cover 10 shown, e.g., by FIG. 3, except that the alternative cover 10a may incorporate multiple pull flags 14, 14a connected to the narrow sides of the cover 10a. For example, the pull flags 14, 14a may be likewise folded and may likewise incorporate sharp bend locations 15 and free ends 16. In the folded state, the pull flags 14, 14a may be arranged such that firstly the pull flag 14 is folded in, and subsequently the pull flag 14a is folded in, such that the pull flags 14, 14a in the folded state may be arranged on the cover bearing on one another. Upon opening the flap 3, the pull flags 14 and 14a may unfold, as best shown by FIG. 7. In some embodiments, a leaf spring (not shown) or other like spring element may be provided in the region of the upper bend location 15 between the cover 10 and the pull flags 14, 14a. For example, the spring element may ensure that not only does the respective pull flag 14, 14a unfold on opening the flap 3, but that the pull flag also unfolds laterally (e.g., relative to the cover 10) by way of the spring, such that the reachability of the pull flag may be improved and the danger of the pull flags tangling may be further minimized.

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A device for keeping ready passenger oxygen masks within a passenger service unit, PSU, the device comprising:
a module container (5) including at least one oxygen connection (13) configured to be coupled to an oxygen supply, the module container configured for installation in a PSU and comprising at least one compartment (6) for receiving a passenger oxygen mask (18), the passenger oxygen mask configured for connection to the oxygen connection and for use by a passenger;
the module container comprising:
at least one release opening (7) having an opening edge;
and
a cover (10) configured for closing the release opening, the cover releasably fastened to the opening edge and comprising at least one pull flag (14) configured for detaching the cover from the opening edge, one or more of the cover and the at least one pull flag (14) connected to an activation unit configured to activate an oxygen flow from the oxygen connection to the at least one passenger oxygen mask; and **characterised in that** the cover is releasably fastened to the opening edges via at least one material-fit connection element, and wherein the at least one material-fit connection element includes at least one hook-and-loop fastener (11).

2. The device of claim 1, wherein the at least one pull flag includes at least one pull flag (14) disposed on a side of the cover away from the release opening.

3. The device of claim 1, wherein the at least one pull flag includes at least one pull flag arranged on an edge of the cover.

4. The device of claim 1, wherein the at least one pull flag and the cover are incorporated as a single component.

5. The device of any preceding claim, wherein the at least one pull flag is folded one or more times when in an undeployed state.

6. The device of claim 1, wherein the at least one pull flag comprises:
at least one pull flag (14) disposed at a first end of the cover;
and
at least one second pull flag (14a) disclosed at a second end of the cover, the second end opposite the first end.

7. The device of any preceding claim, further comprising:
at least one spring element configured to position the at least one pull flag at a lateral distance to the release opening.

8. The device of any preceding claim, wherein the device comprises the passenger (18) oxygen mask and the passenger oxygen mask (18) is freely arranged in the at least one compartment (6) and held therein exclusively by the cover (10).

9. The device of any preceding claim, wherein the cover comprises one or more fibers selected from a group including polyethylene and polypropylene.

10. The device of any preceding claim, wherein the module container includes at least one oxygen coupling (12) in fluid connection with the at least one passenger oxygen mask, the at least one oxygen coupling configured to provide a conduit connection with the oxygen connection.

## Patentansprüche

1. Vorrichtung zum Bereithalten von Passagier-Sauerstoffmasken innerhalb einer Passagier-Service-Einheit (passenger service unit), PSU, wobei die Vorrichtung Folgendes umfasst:
einen Modulbehälter (5), der mindestens eine Sauerstoffverbindung (13) beinhaltet, und die konfiguriert ist, um mit einer Sauerstoffversorgung gekoppelt zu sein, wobei der Modulbehälter konfiguriert ist, um in einer PSU installiert zu sein, und mindestens ein Fach (6) zum Aufnehmen einer Passagier-Sauerstoffmaske (18) umfasst, wobei die Passagier-Sauerstoffmaske zur Verbindung mit der Sauerstoffverbindung und zur Verwendung durch einen Passagier konfiguriert ist;
wobei der Modulbehälter Folgendes umfasst:
mindestens eine Freigabeöffnung (7), die einen Öffnungsrand aufweist;
und
eine Abdeckung (10), die konfiguriert ist, um die Freigabeöffnung zu schließen, wobei die Abdeckung lösbar an der Öffnungskante befestigt ist und mindestens eine Ziehfahne (14) umfasst, die zum Abnehmen der Abdeckung von der Öffnungskante konfiguriert ist, eine oder mehrere der Abdeckung und die mindestens eine Ziehfahne (14), die mit einer Aktivierungseinheit verbunden ist, die konfiguriert ist, um einen Sauerstofffluss von der Sauerstoffverbindung zu der mindestens einen Passagiersauerstoffmaske zu aktivieren; und
**dadurch gekennzeichnet, dass** die Abdeckung über mindestens ein materialschlüssiges Verbindungselement an den Öffnungsrändern lösbar befestigt ist, und wobei das mindestens eine materialschlüssige Verbindungselement mindestens einen Klettverschluss (11) beinhaltet.

2. Vorrichtung nach Anspruch 1, wobei die mindestens eine Ziehfahne mindestens eine Ziehfahne (14) beinhaltet, die an einer Seite der Abdeckung, von der Freigabeöffnung weg, angeordnet ist.

3. Vorrichtung nach Anspruch 1, wobei die mindestens eine Ziehfahne mindestens eine Ziehfahne beinhaltet, die an einer Kante der Abdeckung eingerichtet ist.

4. Vorrichtung nach Anspruch 1, wobei die mindestens eine Ziehfahne und die Abdeckung als eine einzige Komponente eingebaut sind.

5. Vorrichtung nach einem vorstehenden Anspruch, wobei die mindestens eine Ziehfahne in einem nicht entfalteten Zustand einmal oder mehrmals gefaltet ist.

6. Vorrichtung nach Anspruch 1, wobei die mindestens eine Ziehfahne Folgendes umfasst:
mindestens eine Ziehfahne (14), die an einem ersten Ende der Abdeckung angeordnet ist;
und
mindestens eine zweite Ziehfahne (14a), die an einem zweiten Ende der Abdeckung angeordnet ist, wobei das zweite Ende dem ersten Ende entgegengesetzt ist.

7. Vorrichtung nach einem vorstehenden Anspruch, ferner umfassend:
mindestens ein Federelement, das konfiguriert ist, um die mindestens eine Ziehfahne in einem seitlichen Abstand zu der Freigabeöffnung zu positionieren.

8. Vorrichtung nach einem vorstehenden Anspruch, wobei die Vorrichtung die Passagier-Sauerstoffmaske (18) umfasst und die Passagier-Sauerstoffmaske (18) frei in dem mindestens einen Fach (6) eingerichtet ist und darin ausschließlich von der Abdeckung (10) gehalten wird.

9. Vorrichtung nach einem vorstehenden Anspruch, wobei die Abdeckung eine oder mehrere Fasern umfasst, die aus einer Gruppe ausgewählt sind, die Polyethylen und Polypropylen beinhaltet.

10. Vorrichtung nach einem vorstehenden Anspruch, wobei der Modulbehälter mindestens eine Sauerstoffkopplung (12) in Fluidverbindung mit der mindestens einen Passagier-Sauerstoffmaske beinhaltet, wobei die mindestens eine Sauerstoffkopplung konfiguriert ist, um eine Leitungsverbindung mit der Sauerstoffverbindung bereitzustellen.

## Revendications

1. Dispositif pour garder des masques à oxygène pour passager prêts à l'emploi dans une unité de service aux passagers, PSU, le dispositif comprenant :
un conteneur de module (5) comportant au moins une connexion d'oxygène (13) configurée pour être couplée à une alimentation en oxygène, le conteneur de module étant configuré pour être installé dans une PSU et comprenant au moins un compartiment (6) pour recevoir un masque à oxygène pour passager (18), le masque à oxygène pour passager étant configuré pour être raccordé à la connexion d'oxygène et pour être utilisé par un passager ;
le conteneur de module comprenant :
au moins une ouverture de libération (7) ayant un bord d'ouverture ;
et
un couvercle (10) configuré pour fermer l'ouverture de libération, le couvercle étant fixé de manière amovible au bord d'ouverture et comprenant au moins un drapeau à tirer (14) configuré pour détacher le couvercle du bord d'ouverture, un ou plusieurs du couvercle et de l'au moins un drapeau à tirer (14) étant connectés à une unité d'activation configurée pour activer un flux d'oxygène depuis la connexion d'oxygène vers l'au moins un masque à oxygène pour passager ; et **caractérisé en ce que** le couvercle est fixé de manière amovible aux bords d'ouverture via au moins un élément de connexion adapté au matériau, et dans lequel l'au moins un élément de connexion adapté au matériau comporte au moins une fermeture auto-agrippante (11).

2. Dispositif selon la revendication 1, dans lequel l'au moins un drapeau à tirer comporte au moins un drapeau à tirer (14) disposé sur un côté du couvercle éloigné de l'ouverture de libération.

3. Dispositif selon la revendication 1, dans lequel l'au moins un drapeau à tirer comporte au moins un drapeau à tirer agencé sur un bord du couvercle.

4. Dispositif selon la revendication 1, dans lequel l'au moins un drapeau à tirer et le couvercle sont incorporés en un seul composant.

5. Dispositif selon une quelconque revendication précédente, dans lequel l'au moins un drapeau à tirer est replié une ou plusieurs fois lorsqu'il est dans un état non déployé.

6. Dispositif selon la revendication 1, dans lequel l'au moins un drapeau à tirer comprend :
au moins un drapeau à tirer (14) disposé à une première extrémité du couvercle ;
et
au moins un second drapeau à tirer (14a) disposé à une seconde extrémité du couvercle, la seconde extrémité étant opposée à la première extrémité.

7. Dispositif selon une quelconque revendication précédente, comprenant en outre :
au moins un élément de ressort configuré pour positionner l'au moins un drapeau à tirer à une distance latérale de l'ouverture de libération.

8. Dispositif selon une quelconque revendication précédente, dans lequel le dispositif comprend le masque à oxygène pour passager (18) et le masque à oxygène pour passager (18) est agencé librement dans l'au moins un compartiment (6) et y est maintenu exclusivement par le couvercle (10).

9. Dispositif selon une quelconque revendication précédente, dans lequel le couvercle comprend une ou plusieurs fibres choisies dans un groupe comportant le polyéthylène et le polypropylène.

10. Dispositif selon une quelconque revendication précédente, dans lequel le conteneur de module comporte au moins un raccord d'oxygène (12) en connexion fluidique avec l'au moins un masque à oxygène pour passager, l'au moins un raccord d'oxygène étant configuré pour fournir une connexion de conduit avec la connexion d'oxygène.
